# EUROPÄISCHE PATENTANMELDUNG

(11) **EP 0 974 487 A2**
(43) Veröffentlichungstag der Anmeldung: **26.01.2000**
(21) Anmeldenummer: 99109506.8
(22) Anmeldetag: 12.05.1999
(51) Int. Cl.: B60R 5/04

(54) **Rückhaltevorrichtung zur Abtrennung eines Laderaums eines Fahrzeugs, wie z.B. eines KombinationsKraftwagens, einer Grossraumlimousine od. dgl.**

(30) Priorität: 20.07.1998 DE 19832360
(71) Anmelder: PETER BUTZ GmbH & Co Verwaltungs-KG, 40764 Langenfeld (DE)
(72) Erfinder: Cobbaut, Johan, 9340 Smetlede (BE)
(74) Vertreter: Patentanwälte Ostriga & Sonnet

(57) **Zusammenfassung**

Eine Rückhaltevorrichtung zur Abtrennung eines Laderaums eines Fahrzeugs, wie z.B. eines Kombinationskraftwagens, einer Großraumlimousine od. dgl., weist eine fahrzeugseitig befestigbare Wickelwelle (11) auf. Die Wickelwelle (11) besitzt einen Mantel (12) zur Aufnahme einer Werkstoffbahn (B), deren abgewickelter äußerer Querrand am Fahrzeug lösbar zu befestigen ist und deren innerer Querrand (20) bahnseitige Formschlußmittel (F2) aufweist, welche mit mantelseitigen Formschlußmitteln (F1) der Wickelwelle (11) zusammenwirken.

Eine einfache Befestigungsmontage der Werkstoffbahn (B) am Mantel (12) der Wickelwelle (11) wird dadurch erzielt, daß die mantelseitigen Formschlußmittel mindestens ein sich zumindest über einen Teil der Umfangslänge und sich zumindest über einen Teil der Axiallänge des Mantels (12) der Wickelwelle (11) erstreckendes mantelseitig befestigtes Flächenreißverschluß-Element (F1) enthalten, und daß die bahnseitigen Formschlußmittel von mindestens einem am inneren Querrand (20) der Werkstoffbahn (B) befestigten Gegenelement (F2) des Flächenreißverschlusses (F1, F2) gebildet sind.

## Beschreibung

Die Erfindung betrifft eine Rückhaltevorrichtung entsprechend dem Oberbegriff des Anspruchs 1. Eine solche Rückhaltevorrichtung ist in der DE 29 41 711 (s. dort Seite 7 Abs., 2 Fig. 2-4) beschrieben.

Bei der bekannten Rückhaltevorrichtung bestehen die mantelseitigen Formschlußmittel der Wickelwelle aus einer radial in den Querschnitt der Wickelwelle eingelassenen, etwa Ω-förmig hinterschnittenen Nut. Der innere Querrand der von der Wickelwelle aufzunehmenden Werkstoffbahn bildet dabei eine in die Ω-förmig hinterschnittene Axialnut hineinragende Schlaufe, welche ein axial eingeschobenes etwa kederartiges Verriegelungskabel umschlingt. Die mantelseitigen Formschlußmittel sind also von dem inneren Querrand der Werkstoffbahn und von dem kederartigen Verriegelungskabel gebildet.

Die formschlüssige Befestigung der Werkstoffbahn an dem Mantel der Wickelwelle hat sich im praktischen Betrieb der bekannten Rückhaltevorrichtung gemäß der DE 29 41 711 A1 zwar bewährt, jedoch wird die Montageweise zur Befestigung der Werkstoffbahn am Mantel der Wickelwelle, insbesondere das axiale Einschieben des kederartigen Verriegelungskabels in die in der Ω-förmig hinterschnittenen Axialnut befindliche Schlaufe der Werkzeugbahn als zu umständlich empfunden. Dieses zumal dann, wenn Wickelwellen größerer Axiallänge bestückt werden müssen.

Ausgehend von der Rückhaltevorrichtung gemäß der DE 29 41 711 A1, liegt der Erfindung im Bewußtsein der Nachteile des Bekannten die Aufgabe zugrunde, die bekannte Rückhaltevorrichtung so auszubilden, daß diese insbesondere eine einfachere Montagehandhabung beim Befestigen des inneren Querrandes der Werkstoffbahn am Mantel der Wickelwelle gestattet.

Entsprechend der Erfindung wird diese Aufgabe gemeinsam mit den Merkmalen des Oberbegriffs des Anspruchs 1 dadurch gelöst, daß die mantelseitigen Formschlußmittel mindestens ein sich zumindest über einen Teil der Umfangslänge und sich zumindest über einen Teil der Axiallänge des Mantels der Wickelwelle erstreckendes, mantelseitig befestigtes Flächenreißverschluß-Element enthalten, und daß die bahnseitigen Formschlußmittel von mindestens einem am inneren Querrand der Werkstoffbahn befestigten Gegenelement des Flächenreißverschlusses gebildet sind.

Flächenreißverschlüsse, auch "Klettverschlüsse" (s. BROCKHAUS ENZYKLOPÄDIE, 19. Auflage 18. Band 1992 S. 250) genannt, bilden z.B. eine jeweils auf zwei Textilbändern angeordnete Vielzahl von Häkchen, die zum Herbeiführen einer formschlüssigen Verbindung ineinandergedrückt werden und sich dabei verhaken.

In der einfachsten Form genügt es, zur Schaffung einer erfindungsgemäßen Rückhaltevorrichtung, ein Flächenreißverschluß-Element oder mehrere Flächenreißverschluß-Elemente, mit ihren Häkchen nach außen weisend, auf dem Mantel der Wickelwelle und eine entsprechende Anzahl von Gegenelementen des Flächenreißverschlusses, mit den Häkchen zum Mantel der Wickelwelle weisend, am inneren Querrand der Werkstoffbahn zu befestigen und sodann die Flächenreißverschluß-Elemente paarweise durch Gegeneinanderdrücken formschlüssig miteinander zu verhaken. Für den Fall, daß ein je nach zu erwartender Zugbelastung der Werkstoffbahn zu ermittelnder Umschlingungswinkel oder gegebenenfalls eine Mehrfachumschlingung eingehalten wird, ist die vorbeschriebene einfachste Ausführungsform der Erfindung für eine Befestigung der Werkstoffbahn auf dem Mantel der Wickelwelle durchaus hinreichend.

Eine bevorzugte erfindungsgemäße Ausführungsform besteht darin, daß der Mantel der Wickelwelle zur Aufnahme des mindestens einen mantelseitigen Flächenreißverschluß-Elements mindestens eine radial nach außen offene Nut aufweist.

Eine solche Nut kann zweckmäßig einen hinterschneidungsfreien Querschnitt aufweisen, zudem durchgehend ausgebildet sein, sich zwischen den beiden Stirnflächen der Wickelwelle erstrecken und in vorteilhafter Weise eine sich entlang der Mantellinie des Mantels der Wickelwelle erstreckende Axialnut bilden.

Die Axialnut kann einen einfach herzustellenden quadratischen oder rechteckigen Querschnitt aufweisen.

Zur Montage des bahnseitigen inneren Querrandes, der ein aus der Bahnebene vorragendes Flächenreißverschluß-Gegenelement trägt, wird letzteres in einfacher Weise in das in der Nut befindliche mindestens eine mantelseitige Flächenreißverschluß-Element hineingedrückt.

Ein optisch einwandfreier Werkstoffbahnwickel ohne eine störende etwa höckerartige Umfangsmarkierung wird erfindungsgemäß dadurch erzielt, daß die beiden nach außen weisenden Längskanten der Nut in Umfangsrichtung der Wickelwelle einen Radialversatz bilden. Der Radialversatz entspricht dabei zweckmäßig der Dicke der Werkstoffbahn.

Eine vorteilhafte Erfindungsvariante ist dadurch gekennzeichnet, daß das mindestens eine mantelseitige Flächenreißverschluß-Element streifenförmig ausgebildet ist, welches in weiterer Ausgestaltung einen durchgehenden Streifen bildet.

Eine einfache Art, das mantelseitige Flächenreißverschluß-Element mit dem Mantel der Wickelwelle zu verbinden, besteht in einer Verklebung. Dabei kann das Flächenreißverschluß-Element an der den Häkchen abgewandten Außenseite eines Trägerwerkstoffs in an sich bekannter Weise mit einer durch eine Abziehfolie (z.B. Silikonpapier) geschützten Klebstoffschicht versehen sein.

Entsprechend einer bevorzugten Ausführungsform ist das Flächenreißverschluß-Element streifenförmig, vorzugsweise durchgehend streifenförmig ausgebildet und mit dem Grund der Nut verklebt.

In weiterer Ausgestaltung der Erfindung ist jedes bahnseitige Gegenelement an der dem Mantel der Wickelwelle zugewandten Hauptfläche der Werkstoffbahn, dem jeweils korrespondierenden mantelseitigen Flächenreißverschluß-Element entsprechend ausgerichtet, befestigt. Dabei kann es vorteilhaft sein, daß jedes bahnseitige Gegenelement hinsichtlich seiner Umfangskontur dem jeweils korrespondierenden mantelseitigen Flächenreißverschluß-Element ähnlich oder mit diesem kongruent ist.

Die Erfindung ist nicht nur auf geschlossene Bahnen, wie z.B. auf textile Bahnen oder auf geschlossene Folien, anwendbar, sondern die Erfindung läßt sich gleichermaßen vorteilhaft zur Befestigung von netzartigen Werkstoffbahnen am Mantel der Wickelwelle anwenden.

In diesem Zusammenhang ist entsprechend der Erfindung eine Ausführungsform besonders zweckmäßig, bei welcher der innere Querrand der Werkstoffbahn eine den Mantel der Wickelwelle umschlingende Schlaufe bildet, die vorzugsweise geschlossen und im geschlossenen Zustand durch z.B. eine Faden- oder Schweißnaht gesichert ist, wobei die Schlaufe innen das Gegenelement und, zu letzterem korrespondierend, der Mantel der Wickelwelle das mantelseitige Flächenreißverschluß-Element trägt.

Eine für die erfindungsgemäße Anwendung besonders geeignete Art von Flächenreißverschluß-Elementen ist dadurch gekennzeichnet, daß das mantelseitig befestigte Flächenreißverschluß-Element und/oder das bahnseitig befestigte Gegenelement des Flächenreißverschlusses ein extrudiertes Flächengebilde aus Kunststoff, wie z.B. aus Polyamid oder aus Polypropylen, mit kopfförmig angeformten Haft- bzw. Hakenelementen bildet. Derartige Flächenreißverschluß-Elemente werden beispielsweise von der GOTTLIEB BINDER GmbH & Co, D-71088 Holzgerlingen, hergestellt und unter der Bezeichnung MICROPLAST 65-56-HX300PP2, 56-Haft- bzw. Häkchenelemente/cm² aufweisend, MICROPLAST 50-288-HX200-PAE4, 288 Haft- bzw. Häkchenelemente/cm² aufweisend oder MICROPLAST 40-168-HX285-PP2, 168 Haft- bzw. Häkchenelemente/cm² aufweisend vertrieben. Die Kopfform der Haft- bzw. Häkchenelemente ist bei den vorbezeichneten Artikeln der GOTTLIEB BINDER GmbH & Co hexagonal. Die Gesamtdicke eines derartigen Flächenreißverschluß-Elements beträgt ca. 0,4-0,65 mm.

In den Zeichnungen sind bevorzugte Ausführungsbeispiele entsprechend der Erfindung näher dargestellt, es zeigt
Fig. 1 einen schematischen Radialschnitt durch den Mantel einer Wickelwelle, an deren Mantel eine Werkstoffbahn befestigt ist,
Fig. 2 eine vergrößerte Darstellung eines in Fig. 1 eingekreisten und mit II bezeichneten Details,
Fig. 3 eine auseinandergezogene räumliche Darstellung von aus den Fig. 1 und 2 ersichtlichen Elementen,
Fig. 4 in Anlehnung an die Darstellung gemäß Fig. 1 eine abgewandelte Ausführungsform, die sich besonders zur Befestigung netzartiger Werkstoffbahnen eignet,
Fig. 5 eine vergrößerte Darstellung eines in Fig. 4 eingekreisten und mit V bezeichneten Details und
Fig. 6 in Anlehnung an die Darstellung gemäß Fig. 3 eine auseinandergezogene räumliche Darstellung von aus den Fig. 4 und 5 ersichtlichen Bauteilen.

Unabhängig von der jeweiligen Ausführungsform sind einander analoge Bauteile stets mit denselben Bezugsziffern bezeichnet.

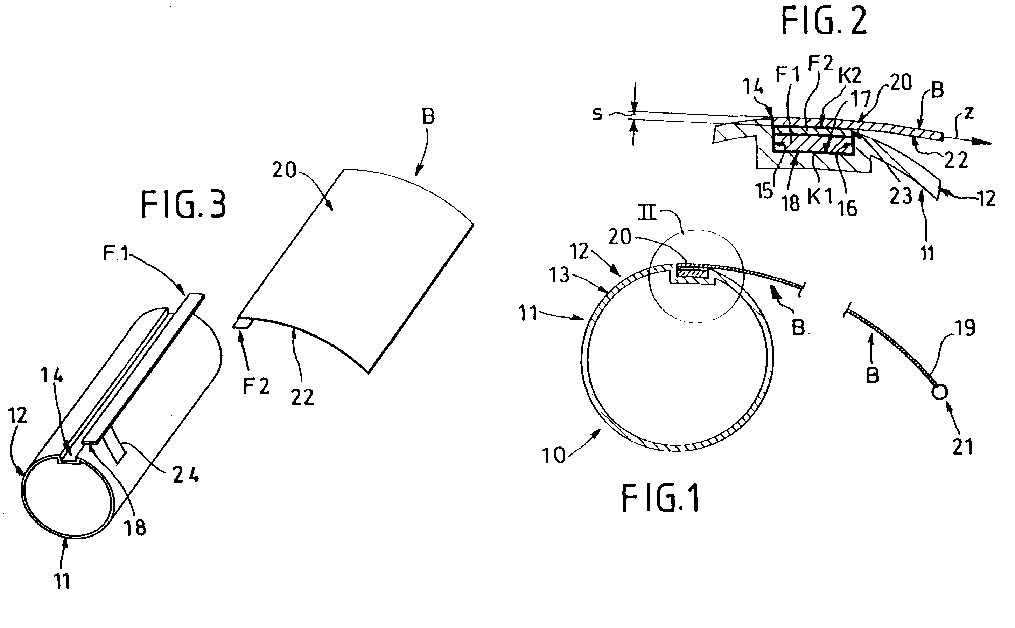

Gemäß Fig. 1 weist eine Rückhaltevorrichtung 10 eine Wickelwelle 11 auf. Von der Wickelwelle 11 ist nur der aus einem Metallrohr bestehende Mantel 12 gezeigt. Die Achse der Wickelwelle 11, deren beidendige Befestigung im fahrzeugseitigen Einbaufeld und der Federmotor sind aus Gründen einer vereinfachten Darstellung nicht gezeichnet.

Der Mantel 12 der Wickelwelle 11, der beispielsweise aus längsschalenartigen gewalzten Einzelteilen zusammengesetzt oder ein Leichtmetallstrangguß-Profil bilden kann, weist eine in die Mantelfläche 13 eingelassene bzw. eingeformte Nut 14 auf, welche Nutseitenwände 15, 16 und einen Nutgrund bzw. eine Nutgrundfläche 17 bildet.

Auf den Nutgrund 17 aufgesetzt ist die Außenfläche 18 eines mantelseitigen Flächenreißverschluß-Elements F1, welches mit einer selbsthaftenden Klebeschicht versehen ist und so mit dem Nutgrund 17 eine Klebefuge K bildet.

Eine Werkstoffbahn B, beispielsweise eine textile Plane, weist einen von der Wickelwelle 11 abrollbaren äußeren Querrand 19 und einen der Wickelwelle 11 zugewandten inneren Querrand 20 auf.

Am äußeren Querrand 20 ist eine Haltestange 21 befestigt, deren beidendseitig z.B. pilzartig hinterschnittene Enden in nicht näher dargestellter Weise in nicht gezeigte fahrzeugseitige taschenartige Aufnahme-Beschläge lösbar eingesetzt werden können. Dabei ist die abgewinkelte Werkstoffbahn B z.B. zwischen den Rückseiten von Fond-Sitzlehnen und der heckklappenseitigen Innenfläche eines Kombinationskraftwagens aufgespannt.

Die Werkstoffbahn B trägt an ihrem inneren Querrand 20, und zwar an ihrer Innenfläche 22, ebenfalls ein Flächenreißverschluß-Element, und zwar das Gegenelement F2. Das Gegenelement F2 kann mit der Innenfläche 22 der Werkstoffbahn B z.B. eine Klebefuge K2 oder eine Schweißfuge bilden. Das Gegenelement F2 kann aber auch mittels nicht näher gezeigter Fadennähte mit der Werkstoffbahn B fest sein. Es ist vorstellbar, daß die beiden Flächenreißverschluß-Elemente F1 und F2 mit Köpfen ihrer im einzelnen nicht dargestellten Hakenelemente formschlüssig ineinandergreifen.

Zugleich ist die Anordnung so getroffen, daß bei einer in die Werkstoffbahn B eingeleiteten Zugbelastung entsprechend dem Pfeil Z sich die in Zugrichtung weisende Schmalfläche 23 des Gegenelements F2 an der Nutseitenwand 16 abstützen kann.

Aus Fig. 2 geht auch hervor, daß die Nutseitenwand 15 um die Dicke s der werkstoffbahn B radial nach außen versetzt ist, so daß die Bahn B ohne Höckerbildung optisch einwandfrei glattflächig auf den Mantel 11 aufgewickelt werden kann.

Anhand von Fig. 3 ist vorstellbar, wie die Werkstoffbahn B auf dem Mantel 12 der Wickelwelle 11 befestigt werden kann. Dieses geschieht wie folgt: Von der Außenfläche 18 des Flächenreißverschluß-Elements F1 wird ein Schutzstreifen 24, der beispielsweise aus Silikonpapier besteht, abgezogen, so daß die nicht dargestellte Klebeschicht zugänglich wird und das Element F1 unter Bildung der aus Fig. 2 ersichtlichen Klebefuge K1 in die Nut 14, die einen rechteckigen Querschnitt aufweist, eingelegt wird. An der Innenfläche 22 des inneren Querrandes 20 der Werkstoffbahn B ist das Gegenelement F2 bereits befestigt, beispielsweise vernäht. Der innere Rand 20 wird nun mit dem Gegenelement F2 voran in die Nut 14 eingelegt und eingedrückt, so daß die Werkstoffbahn B, fest, im Bedarfsfall jedoch lösbar, mit dem Mantel 12 der Wickelwelle 11 verbunden ist.

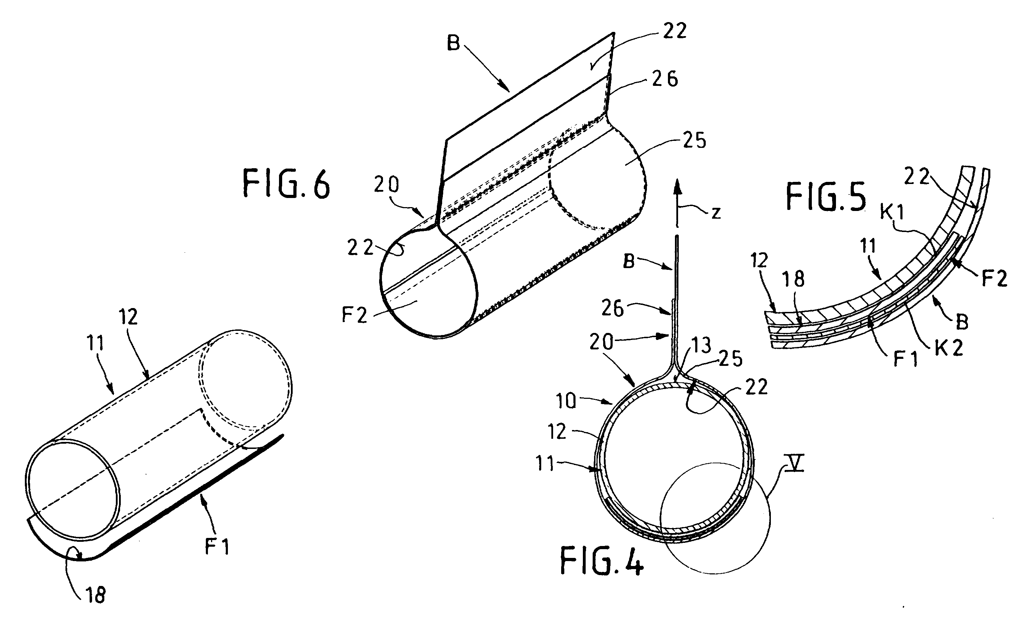

Die in den Fig. 4-6 gezeigte andere Ausführungsform ist zwar auch für geschlossene Werkstoffbahnen, insbesondere jedoch für netzartige Werkstoffbahnen, geeignet. In den Fig. 4 und 6 ist nicht die gesamte Werkstoffbahn B, sondern nur deren innerer Querrand 20 und ein kleiner sich daran anschliessender Längenbereich der Bahn B gezeigt.

Obwohl im einzelnen nicht dargestellt, soll die Werkstoffbahn B entsprechend der Ausführungsform der Fig. 4-6 eine netzartige Struktur aufweisen. Dabei bildet der innere Querrand 20 der Werkstoffbahn B eine geschlossene Schlaufe 25, die in der Überlappungszone 26 mit dem übrigen Bahnbereich z.B. durch eine Klebefuge, durch eine Schweißnaht oder durch eine Flächenverschweißung gesichert ist.

Vor der Schlaufenbildung wurde die Innenfläche 22 der etwa kreiszylindrischen Schlaufe 25 mit einem Flächenreißverschluß-Element, dem Gegenelement F2 versehen, welches sich über die gesamte Länge der Schlaufe 25 und außerdem über einen Umfangswinkel von etwa 90° erstreckt. Das Gegenelement F2 ist mit der Innenfläche 22 der Schlaufe 25 beispielsweise vernäht, verschweißt oder z.B. mittels einer Klebefuge K2 verklebt.

Bezüglich Anordnung, Form und Größe mit dem Gegenelement F2 korrespondierend, ist der im vorliegenden Fall außen völlig glatte Mantel 12 der Wickelwelle 11 mit dem Flächenreißverschluß-Element F1 versehen, beispielsweise unter Bildung einer Klebefuge K1, verklebt.

Die Montage der aus den Fig. 4-6 ersichtlichen Anordnung geschieht wie folgt:

Über die das Flächenreißverschluß-Element F1 tragende Wickelwelle 11 wird ein Montage-Hilfsmittel, z.B. ein Trennschlauch aus dünnem Papier oder aus Kunststoff gezogen. Sodann wird die Schlaufe 25 der Werkstoffbahn B axial über die Wickelwelle 11 aufgeschoben, der Trennschlauch herausgezogen und die Werkstoffbahn B in Zugrichtung Z angezogen, wodurch eine feste, insbesondere wickelfeste, Verbindung zwischen der Werkstoffbahn B und der Wickelwelle 11 herbeigeführt wird.

Eine zweckmäßige Kombination für beide Ausführungsbeispiele der Fig. 1-6 kann darin bestehen, daß das mantelseitige Flächenreißverschluß-Element F1 von einem weiter oben beschriebenen Kunststoff-Flächengebilde z.B. der GOTTLIEB BINDER GmbH & Co und das korrespondierende Gegenelement F2 von einer textilen Schlingenware (mit entsprechendem Träger) gebildet ist.

## Patentansprüche

1. Rückhaltevorrichtung (10) zur Abtrennung eines Laderaums eines Fahrzeugs, wie z.B. eines Kombinationskraftwagens, einer Großraumlimousine od. dgl., mit einer fahrzeugseitig befestigbaren Wickelwelle (11), die einen Mantel (12) zur Aufnahme einer Werkstoffbahn (B) aufweist, deren abgewikkelter äußerer Querrand (19) am Fahrzeug (bei 21) lösbar zu befestigen ist und deren innerer Querrand (20) bahnseitige Formschlußmittel (F2) aufweist, welche mit mantelseitigen Formschlußmitteln (F1) der Wickelwelle (11) zusammenwirken, dadurch gekennzeichnet, daß die mantelseitigen Formschlußmittel mindestens ein sich zumindest über einen Teil der Umfangslänge und sich zumindest über einen Teil der Axiallänge des Mantels (12) der Wickelwelle (11) erstreckendes, mantelseitig befestigtes Flächenreißverschluß-Element (F1) enthalten, und daß die bahnseitigen Formschlußmittel von mindestens einem am inneren Querrand (20) der Werkstoffbahn (B) befestigten Gegenelement (F2) des Flächenreißverschlusses (F1, F2) gebildet sind.

2. Rückhaltevorrichtung nach Anspruch 1, dadurch gekennzeichnet, daß der Mantel (12) der Wickelwelle (11) zur Aufnahme des mindestens einen mantelseitigen Flächenreißverschluß-Elements (F1) mindestens eine radial nach außen offene Nut (14) aufweist.

3. Rückhaltevorrichtung nach Anspruch 2, dadurch gekennzeichnet, daß die Nut (14) hinterschneidungsfrei ausgebildet ist.

4. Rückhaltevorrichtung nach Anspruch 2 oder nach Anspruch 3, dadurch gekennzeichnet, daß der Mantel (12) der Wickelwelle (11) eine durchgehende Nut (14) aufweist.

5. Rückhaltevorrichtung nach Anspruch 4, dadurch gekennzeichnet, daß sich die Nut (14) zwischen den beiden Stirnflächen der Wickelwelle (11) erstreckt.

6. Rückhaltevorrichtung nach einem der Ansprüche 1 bis 5, dadurch gekennzeichnet, daß die Nut eine sich entlang der Mantellinie des Mantels (12) der Wickelwelle (11) erstrekkende Axialnut (14) bildet.

7. Rückhaltevorrichtung nach einem der Ansprüche 3 bis 6, dadurch gekennzeichnet, daß die Nut (14) einen quadratischen oder einen rechteckigen Querschnitt aufweist.

8. Rückhaltevorrichtung nach einem der Ansprüche 2 bis 6, dadurch gekennzeichnet, daß die beiden radial nach außen weisenden Längskanten (bei 15, 16) der Nut (14) in Umfangsrichtung der Wickelwelle (11) einen Radialversatz (bei s) bilden.

9. Rückhaltevorrichtung nach einem der Ansprüche 1 bis 8, dadurch gekennzeichnet, daß das mindestens eine mantelseitige Flächenreißverschluß-Element (F1) streifenförmig ausgebildet ist.

10. Rückhaltevorrichtung nach Anspruch 9, dadurch gekennzeichnet, daß das mantelseitige Flächenreißverschluß-Element (F1) einen durchgehenden Streifen bildet.

11. Rückhaltevorrichtung nach einem der Ansprüche 1 bis 10, dadurch gekennzeichnet, daß das mindestens eine mantelseitige Flächenreißverschluß-Element (F1) mit dem Mantel (12) der Wickelwelle (11) verklebt ist.

12. Rückhaltevorrichtung nach Anspruch 11, dadurch gekennzeichnet, daß das Flächenreißverschluß-Element (F1) streifenförmige vorzugsweise durchgehend streifenförmig, ausgebildet und mit dem Grund (17) der Nut (14) verklebt ist.

13. Rückhaltevorrichtung nach einem der Ansprüche 1 bis 12, dadurch gekennzeichnet, daß jedes bahnseitige Gegenelement (F2) an der dem Mantel (12) der Wickelwelle (11) zugewandten Hauptfläche (22) der Werkstoffbahn (B), dem jeweils korrespondierenden mantelseitigen Flächenreißverschluß-Element (F1) entsprechend ausgerichtet, befestigt ist.

14. Rückhaltevorrichtung nach Anspruch 13, dadurch gekennzeichnet, daß jedes bahnseitige Gegenelement (F2) hinsichtlich seiner Umfangskontur dem jeweils korrespondierenden mantelseitigen Flächenreißverschluß-Elements (F1) ähnlich oder mit diesem kongruent ist.

15. Rückhaltevorrichtung nach einem der Ansprüche 1 bis 14, dadurch gekennzeichnet, daß der innere Querrand (20) der Werkstoffbahn (B) eine den Mantel (12) der Wickelwelle (11) umschlingende Schlaufe (25) bildet, die vorzugsweise geschlossen und im Geschlossenzustand durch z.B. eine Faden- oder Schweißnaht (bei 26) gesichert ist, wobei die Schlaufe (25) innen das Gegenelement (F2) und, zu letzterem korrespondierend, der Mantel (12) der Wickelwelle (11) das mantelseitige Flächenreißverschluß-Element (F1) trägt.

16. Rückhaltevorrichtung nach einem der Ansprüche 1 bis 15, dadurch gekennzeichnet, daß das mantelseitig befestigte Flächenreißverschluß-Element (F1) und/oder das bahnseitig befestigte Gegenelement (F2) des Flächenreißverschlusses (F1, F2) ein extrudiertes Flächengebilde aus Kunststoff, wie z.B. aus Polyamid oder aus Polypropylen, mit kopfförmig angeformten Haftelementen bildet.
